# EUROPEAN PATENT APPLICATION

(11) **EP 4 509 373 A2**
(43) Date of publication of application: **19.02.2025**
(21) Application number: 24192457.0
(22) Date of filing: 01.08.2024
(51) Int. Cl.: B60S 1/38, B60S 1/52, C03C 23/00

(54) **SYSTEM AND METHOD FOR IMPROVING WINDSHIELD GLARE**

(30) Priority: 15.08.2023 US 202363532774 P; 26.07.2024 US 202418785152
(71) Applicant: Illinois Tool Works Inc., Glenview IL 60025 (US)
(72) Inventor: YANG, Gouzhen, Glenview, 60025 (US); ROSAS, Martin William, Glenview, 60025 (US); WAGNER, Sarah Edwards, Glenview, 60025 (US); PATIL, Ishwar, Glenview, 60025 (US)
(74) Representative: HGF

(57) **Abstract**

Described is a wiper blade for a windshield of a vehicle configured to apply a reparative material to a surface of the windshield. The wiper blade having a squeegee and wiping lip. The wiping lip having a coating of the uncured reparative material or receiving a coating of the uncured reparative material from a reservoir coupled to the wiping blade. The wiping blade applying the uncured reparative material to a surface of the windshield by wiping the windshield. The uncured reparative material integrating with and curing on a surface of the windshield to form a cured reparative material. The cured reparative material being configured to fill scratches in a surface of the windshield, thereby reducing glare from the windshield.

## Description

### RELATED APPLICATION

The present application claims priority to United States Provisional Patent Application No. 63/532,774, filed August 15, 2023, and entitled "System And Method For Improving Windshield Glare," which is hereby incorporated by reference in its entirety.

### BACKGROUND

Windshield wipers are used to remove rain, snow, ice, washer fluid, water, and/or other debris from a vehicle's front or rear windshield. Almost all vehicles are equipped with one or more windshield wipers, including cars, trucks, buses, train locomotives, watercraft (e.g., those with a cabin) and even some aircraft. In many jurisdictions, windshield wipers are a legal requirement. Windshield glare is typically caused by light reflecting off a surface of a windshield. Scratches in the surface of the windshield exacerbate this effect. In order to reduce windshield glare, scratches in the surface of the windshield can be repaired; thus, causing the light to have fewer surfaces off of which to reflect.

Various techniques are known for repairing scratches in a surface of a windshield. Existing solutions are designed to fill larger chips and scratches in a small area of a surface of the windshield. The current technologies can be inadequate at reducing windshield glare because they fail to fill smaller scratches over a larger area. For example, a reparative material can be applied directly to large scratches in a windshield; however, this method of spot treatment does not reduce glare over the larger surface of the windshield.

Despite advancements to date, a need exists for a system that can effectively apply a layer of reparative material to fill shallow scratches in a windshield, thus reducing windshield glare. For example, a system and method for applying an even coating of reparative material that is configured to cure directly on the surface of the windshield; thus effectively filling smaller scratches over a large area of the windshield to thereby reduce glare from the windshield.

### SUMMARY

The present disclosure relates generally to an improved wiper blade, system, and method, substantially as illustrated by and described in connection with at least one of the figures, as set forth more completely in the claims. More specifically, the present disclosure relates to an improved wiper blade and wiper blade system that can effectively apply a reparative material to a surface of a windshield in an uncured state.

### DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1a illustrates an example vehicle having a windshield and a pair of wiper blades.
Figure 1b illustrates an assembly view of an example connection point between the wiper blade and the wiper arm.
Figures 2a and 2b illustrate perspective side and cross-sectional views of a wiper blade in accordance with an aspect of the present disclosure.
Figure 3 illustrates a wiper blade with a coating of uncured reparative material in accordance with another aspect of the present disclosure.
Figure 4 is a diagram of a wiper blade applying the uncured reparative material to fill scratches in a windshield.
Figures 5a and 5b are diagrams application and resulting reduction in glare from applying a reparative material on a surface of a windshield.

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

Wiper blades used in vehicles vary in size and shape. In some cases, wiper blades can be the same shape, but will vary in size. While wiper blades are most often associated with automobiles (e.g., cars, trucks, etc.), they are likewise employed in numerous other vehicles, such as trains, watercraft, and aircraft. Therefore, the following disclosure should not be limited to wiper blades and wiper arms used in automobiles, but rather would be applicable to wiper blades and wiper arms used in any type of vehicle.

The present disclosure relates to an improved wiper blade, wiper blade system, and method that can effectively reduce glare from a windshield by filling minor scratches with an uncured reparative material using, for example, a wiper blade. Scratches in a windshield can be repaired by applying an uncured reparative material, which then cures on the surface of the windshield. The reparative material fills these minor scratches, thus repairing the surface of the windshield and reducing glare upon cure.

In one example, a wiper blade for reducing glare on a windshield of a vehicle comprises: a squeegee, wherein the squeegee is configured to transfer a reparative material to a surface of the windshield in an uncured state; and a wiping lip coupled to the squeegee, wherein the wiping lip includes a coating comprising the reparative material.

In another example, a wiper blade for reducing refraction on a windshield of a vehicle comprises: a spoiler having a reservoir configured to hold a reparative material; a squeegee coupled to the spoiler, wherein the squeegee comprises a wiping lip; and a plurality of dispensing ports distributed along a length of the wiper blade, wherein the plurality of dispensing ports is fluidly coupled to the reservoir and configured to dispense the reparative material onto a surface of the windshield or the wiping lip. The spoiler may further comprise one or more filler ports fluidly coupled to the reservoir.

In some examples, the wiper blade further comprises a seal to mitigate premature curing of the reparative material prior to application. The seal may comprise an ultraviolet (UV) light filter. The reparative material is configured to fill scratches on the surface of the windshield to reduce refraction from a surface of the windshield, for example, when the reparative material is configured to cure when exposed to one or more of water, oxygen, and/or ultraviolet (UV) light.

In another example, a method for reducing refraction from a windshield of a vehicle comprising: applying a coating of a reparative material in an uncured state to a wiping lip of a wiper blade, wherein the reparative material is configured to fill scratches in a surface of the windshield and to cure on a surface of the windshield, and wherein the wiping lip is configured to apply the reparative material to a surface of the windshield by wiping the windshield; and sealing, via a seal, the reparative material prior to application. In some examples, the method further comprises a step of applying the coating of the reparative material to the wiping lip through a reservoir coupled to the squeegee. In some examples, the method further comprises a step of applying the coating of the reparative material to the wiping lip prior to coupling the squeegee to the wiping blade. In some examples, the method further comprises a step of configuring the reparative material to cure when exposed to ultraviolet (UV) light.

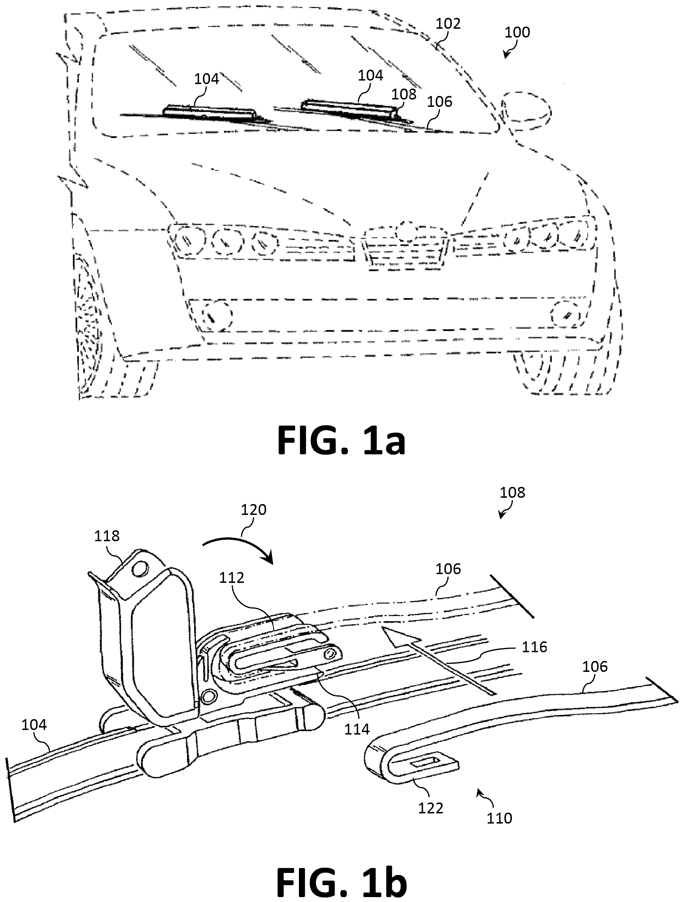

Figure 1a illustrates an example vehicle 100 having a windshield 102 and a pair of wiper blades 104. As illustrated, each wiper blade 104 is removably coupled to a wiper arm 106 of the vehicle 100 via a coupling 108. As is known in the art, the wiper arms 106 (and, therefore, the wiper blades 104) are configured to translate back and forth across the windshield 102 to clear the windshield 102 of rain, snow, and debris via one or more electric motors and mechanical linkages associated with the vehicle 100.

Figure 1b illustrates an assembly view of an example coupling 108 between the wiper blade 104 and the wiper arm 106. As illustrated, each wiper arm 106 includes or otherwise defines, at its distal end, an arm-side connector 110. The arm-side connector 110 is configured to engage and secure the wiper blade 104 via a complimentary blade-side connector 112 positioned on or otherwise associated with the wiper blade 104. In the illustrated example, the arm-side connector 110 is inserted into a J-shaped slot 114 of the blade-side connector 112 as indicated by arrow 116. Once assembled, a locking cap 118 can be folded as indicated by arrow 120 (e.g., pivoted about a hinge) and positioned to cover, secure, and protect the connected arm-side connector 110 and blade-side connector 112. In the illustrated example, the wiper arm 106 includes an arm-side connector 110 configured a J-Hook connector 122, but other connector types are contemplated.

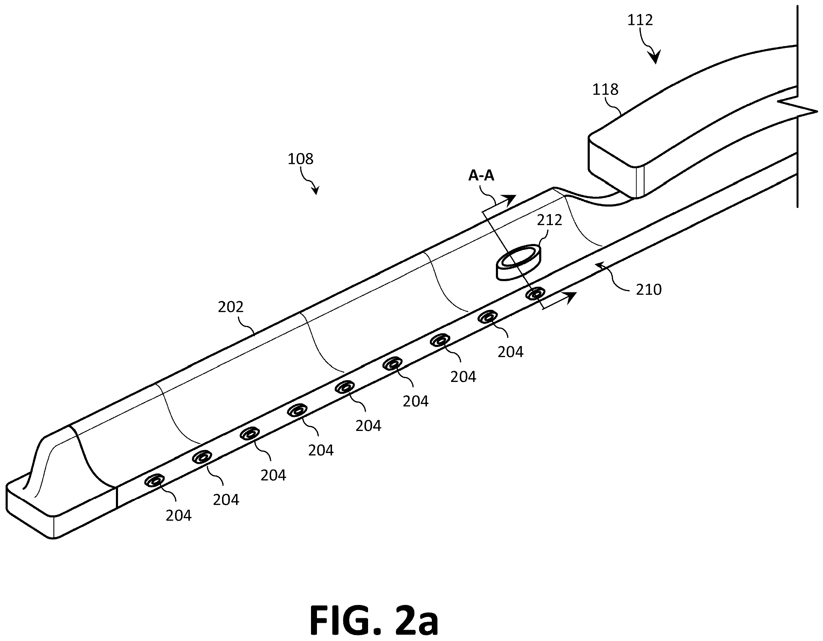

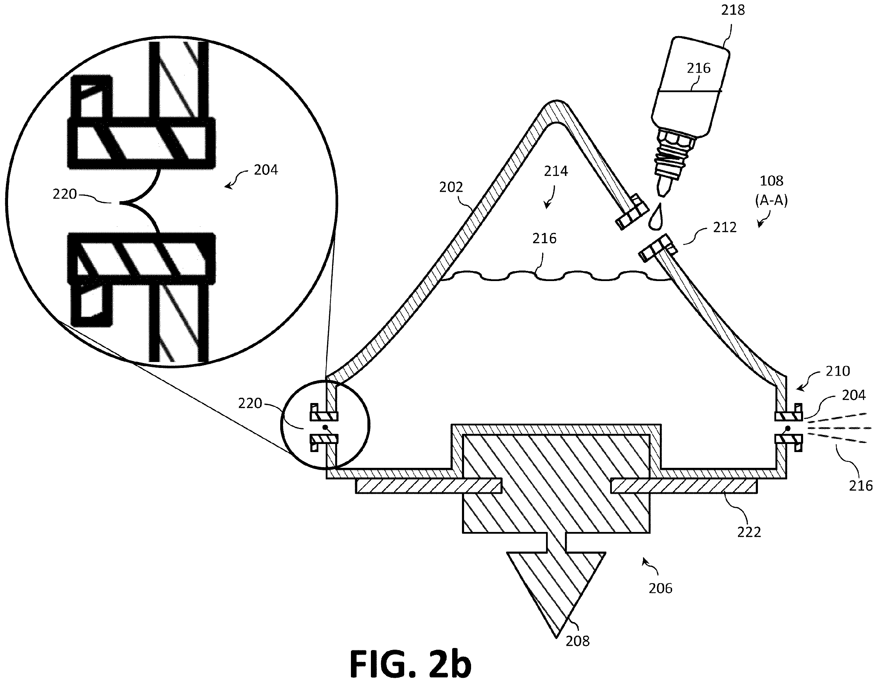

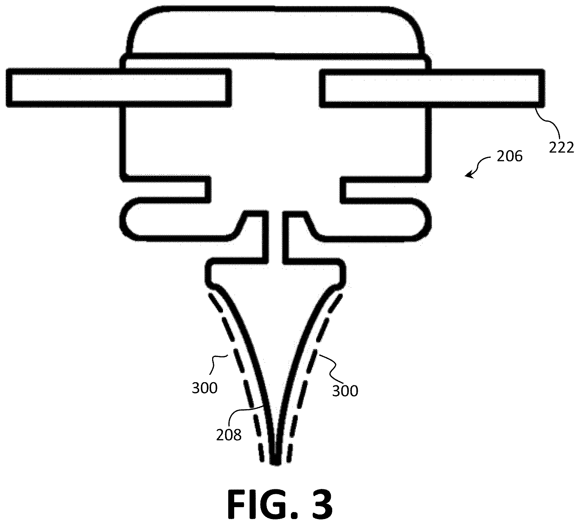

Figures 2a and 2b illustrate perspective side and cross-sectional views of a wiper blade 104 in accordance with an aspect of the present disclosure. Specifically, Figure 2b illustrates a cross-sectional view of the wiper blade 104 taken along cut line A-A. The wiper blade 104 generally comprises a spoiler 202, a squeegee retainer 222, and a squeegee 206 having a wiping lip 208. The wiper blade 104 is configured to couple to the wiper arm 106 via the blade-side connector 112 of the coupling 108. The blade-side connector 112 may be integral with a portion of the wiper blade 104, such as the spoiler 202 or to the squeegee retainer 222, or attached thereto via one or more fasteners, adhesives, etc. In some examples, as illustrated in Figures 2b and 3, the squeegee retainer 222 can be a spring steel component shaped to define a groove along its length to receive and/or otherwise retain the squeegee 206. The squeegee retainer 222 may default or spring to a curved shape, thus causing the squeegee 206 to match the contour of the windshield 102. The spoiler 202 can be over molded (in part) or attached to the squeegee retainer 222 via one or more adhesive clips, ribs, retainers, or otherwise.

As illustrated, in one example, the wiper blade 104 comprises an embedded manifold system to dispense a reparative material 216 in an uncured state (e.g., an uncured reparative material 216 - a liquid state) onto a surface of the windshield 102 and/or the wiping lip 208 (or other components of the wiper blade 104, such as the squeegee 206). The reparative material 216 can be applied in a metered or regulated fashion via a plurality of dispensing ports 204. The wiper blade 104 comprises an embedded manifold system having a reservoir 214 that can be refilled with the reparative material 216, for example, using a bottle 218, to prolong the useful life of the wiper blade 104. Unlike a one-time-use coated wiper blade, as described in connection with Figure 3, the wiper blade 104 can be refilled with reparative material 216 once depleted.

The reparative material 216 is configured to transition from an uncured state to a cured state upon application to the surface of a windshield 102. For example, the reparative material 216 flows by capillary action into a scratch or crack. In one example, the reparative material 216 remains liquid over a temperature range of -40° F to 200° F. In most applications, the windshield 102 will not be exposed to temperatures outside this range, ensuring the reparative material 216 remains liquid during use.

The reparative material 216 is configured to fill scratches and cure on the surface of the windshield 102, transforming into a cured state (e.g., a cured reparative material 216 - a solid state). For example, the reparative material 216 can transition from the uncured state to the cured state when exposed to ambient conditions for a period of time. In some examples, curing of the reparative material 216 is accomplished through exposure to ultraviolet (UV) light, humidity, oxygen, carbon dioxide, etc.

In some examples, the reparative material 216 is a silicone- or epoxy-based polymer. As used herein, "-based" refers to the composition of the reparative material 216 having silicone or epoxy polymer in a greater amount than any other constituent. Example resins include, for example, polyester resins, phenolic resins, alkyd resins, polycarbonate resins, polyamide resins, polyurethane resins, silicone resins, epoxy resins, polyethylene resins, acrylic resins, polystyrene resins, polypropylene resins, etc. Further examples of the reparative material 216 may include, but are not limited to, one-component epoxies.

While a bottle 218 is illustrated, in some examples, the reservoir 214 itself may be replaced with a new full reservoir 214. For example, the spoiler 202 can be provided as a replaceable consumable that, once the reservoir 214 is empty, can be replaced with a spoiler 202 having a new full reservoir 214. In the illustrated example, the spoiler 202 is at least partially hollow and shaped to define or otherwise contain the reservoir 214 or other components of the manifold system. The reservoir 214 is configured to house the reparative material 216. The reparative material 216 is sealed prior to application to prevent premature curing. For example, a seal (e.g., a sheet, film, foil, etc.) can be used to prevent exposure of the reparative material 216 to the ambient environment, thus preventing exposure to UV, oxygen, etc. In one example, the seal comprises a UV filter.

The volume of the reservoir 214 is dictated (or limited) by the length and cross-sectional area of the spoiler 202. The length of the spoiler 202 will depend on the vehicle 100, as the length of a wiper blade 104 (and thus the size of the reservoir 214 and the quantity of dispensing ports 204) will vary depending on the type of vehicle 100.

The spoiler 202 comprises or defines the plurality of dispensing ports 204 through which the reparative material 216 can be dispensed onto the windshield 102, the wiping lip 208, and/or other components of the wiper blade 104. The plurality of dispensing ports 204 is distributed along the length of the spoiler 202 and fluidly coupled to the reservoir 214. The proposed wiper blade 104 comprises a plurality of dispensing ports 204 distributed along the length of the spoiler 202 to dispense the reparative material 216 in a substantially even fashion. The dispensing ports 204 can be positioned and distributed on each side of the spoiler 202. Alternatively, the dispensing ports 204 can be distributed along the length of another component of the wiper blade 104, such as the squeegee 206 or a frame structure.

The dispensing ports 204 can be molded into the spoiler 202 (e.g., during manufacture) or machined (e.g., cut or drilled) into the spoiler 202 (e.g., after manufacture, whether mechanically or via a laser). In the illustrated example, the dispensing ports 204 are provided in the form of generally circular ports. While illustrated as generally circular, other shapes are contemplated for the dispensing ports 204, including slits and slots. Similarly, the plurality of dispensing ports 204 is illustrated as being arranged in the side wall 210 in a linear pattern (e.g., a row), but other patterns are contemplated, such as a grid pattern.

The windshield wiper blade 104 and its components (e.g., the spoiler 202, the squeegee 206, and/or the wiping lip 208) can be fabricated from one or more elastomeric materials. Example elastomeric materials include, without limitation, thermoplastic polyurethane (TPU), thermoplastic vulcanizates (TPV), thermoplastic elastomers (TPE), flexible polyurethane (FPU), silicone, etc. In some examples, two or more components of the wiper blade 104 can be formed from the same material and/or as a single, integrated component. For example, the squeegee 206 and the wiping lip 208 could be fabricated as a single component.

In some examples, the windshield wiper blade 104 (or a portion thereof) can be a printed plastic material component (e.g., thermoplastic, TPU, FPU, etc.). Printed plastic material components can be printed with great accuracy and numerous details, which is particularly advantageous for creating components requiring complex and/or precise features. In addition, additive manufacturing techniques obviate the need for mold tooling, thereby lowering up-front manufacturing costs, which is particularly advantageous in low-volume productions. The wiper blade 104 may be fabricated using material extrusion (e.g., fused deposition modeling (FDM)), stereolithography (SLA), selective laser sintering (SLS), material jetting, binder jetting, powder bed fusion, directed energy deposition, VAT photopolymerization, and/or any other suitable type of additive manufacturing/3D printing process.

While illustrated as an internal reservoir 214, additionally or alternatively, an external reservoir (e.g., one that is external to the wiper blade 104 / spoiler 202) can be used. Using an external reservoir enables storage of a large volume of reparative material 216 that would otherwise be prohibited due to the size constraints imposed by the size of the spoiler 202.

The wiper blade 104 allows for the reparative material 216 to be stored within the wiper blade 104 and applied slowly to the wiping lip 208 over time as the wiper blade 104 is used. To dispense the reparative material 216 in a metered or regulated fashion, the wiper blade 104 further comprises a valve 220 to control (e.g., meter or otherwise regulate) the release of the reparative material 216. The valve 220 may be fluidly coupled to or integrated with each of the plurality of dispensing ports 204. In one example, the valve 220 is a check valve designed to allow the reparative material 216 to flow out of the reservoir 214 and prevent liquid from flowing into the reservoir 214. Other example valves 220 include weighted valves, pressure valves, etc.

During operation, the back-and-forth motion of the wiper blade 104 can cause the valves 220 to open and close as the reparative material 216 sloshes back and forth within the reservoir 214. The movement of the wiper blade 104 and the reparative material 216 contained therein causes pressure against the valve 220, achieving a cracking pressure that forces a stopper off the seat (e.g., as is the case with a ball check valve), thus opening the valve 220. Once the stopper is off the seat, the reparative material 216 is permitted to exit the reservoir 214 through the dispensing port 204 and onto the wiping lip 208 or otherwise (e.g., onto the squeegee 206).

While a valve 220 is described, additionally or alternatively, a wicking material can be used to pass or otherwise convey the reparative material 216 from the reservoir 214, through an opening (whether a dispensing port 204 or otherwise) in a wall of the spoiler 202, and onto the wiping lip 208. The wicking material operates using the principles of capillary action to move the reparative material 216 through the wicking material. Once the uncured reparative material 216 is applied to the wiping lip 208 (or another portion of the wiper blade), the wiper blade 104 may apply the reparative material 216 to a surface of the windshield 102 by wiping the windshield 102.

When a wicking material is used, care should be taken to ensure that exposure of the external end of the wicking material (the output end) to conditions that could lead to unwanted curing of the reparative material 216 is mitigated. For example, when the reparative material 216 is cured via UV light, the wicking material should be positioned such that it is not exposed to UV light and/or positioned behind a UV filter or lens. Unwanted and/or premature curing could result in flow blockage.

Once the reparative material 216 is consumed, the fluid reservoir 214 can be replenished, allowing for continued application of the reparative material 216 using the same wiper blade 104. To that end, the reservoir 214 will have one or more access filler ports 212, which allow the reservoir 214 to be replenished with reparative material 216 after consumption. To mitigate evaporation and spillage, the access filler ports 212 can include a lid or cap, such as a threaded cap.

Figure 3 illustrates another embodiment of a wiper blade 104 having a squeegee 206 with a wiping lip 208. In this example, rather than a reservoir, the wiping lip 208 includes a coating 300 of reparative material 216. A coating 300 of the reparative material 216 is applied to the sides of the wiping lip 208 coupled to the squeegee 206. The reparative material 216 is sealed prior to application to prevent premature curing. For example, a seal (e.g., a sheet, film, foil, etc.) can be used to prevent exposure of the reparative material 216 to the ambient environment, thus prohibiting exposure to UV, oxygen, etc. In one example, the seal comprises a UV filter. The wiping lip 208 may apply the reparative material 216 to a surface of the windshield 102 by wiping the windshield 102 with the coating 300 of reparative material 216.

The reparative material 216 used in the coating 300 can be substantially the same as the reparative materials 216 described in connection with Figures 2a and 2b, except provided in a different format. That is, while the reparative materials 216 described in connection with Figures 2a and 2b are delivered as a liquid via a reservoir, the reparative materials 216 described in connection with Figure 3 are delivered as a solid (or semi-solid) via the coating 300. The reparative material 216 is applied to (e.g., wiped onto) a surface of the windshield 102 as the wiper blade 104 moves back and forth across the windshield 102. Once applied to a surface of the windshield 102, the reparative material 216 fills and cures within any scratches formed on the windshield 102 as described in connection with Figures 2a and 2b.

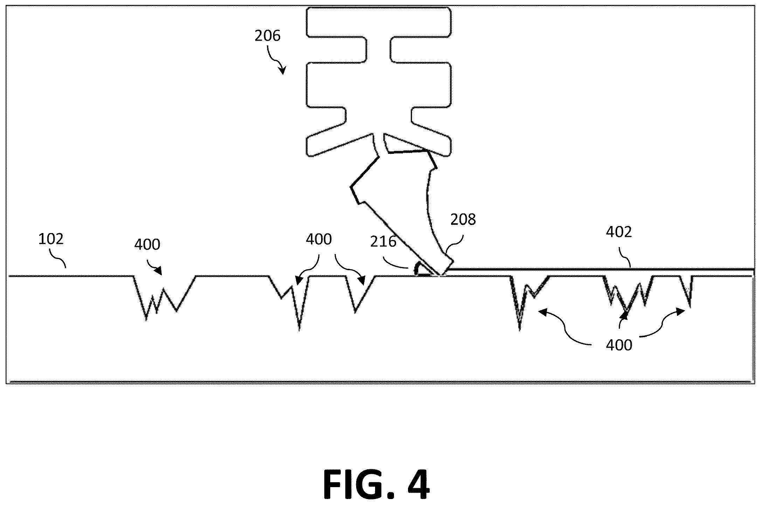

Figure 4 is a diagram of a wiper blade 104 applying the uncured reparative material 216 to fill scratches in a windshield 102. Specifically, Figure 4 illustrates the reparative material 216 filling scratches 400 and then curing on the surface of the windshield 102. The reparative material 216 is configured to fill scratches 400 in the surface of the windshield 102 as it is applied via a wiping motion. After filling scratches 400, the reparative material 216 is configured to cure on the surface of the windshield 102, becoming a reparative material in a cured state - a cured reparative material 402. In one embodiment, the cured reparative material 402 is configured to integrate with the surface of the windshield 102, filling scratches 400 in the windshield 102.

A crack or break in a windshield 102 is visible because as light rays pass the boundary between the glass and the air in the crack, they are refracted or bent. Light that is reflected back from such boundaries comes at a different angle than if there were no crack, and hence the eyes and brain of the observer sense the discontinuity. If two materials have the same index of refraction, there will be no bending of the light rays at a boundary between the materials, and an observer will not sense the discontinuity. Thus, a scratch filled with a reparative material 216 that has the same index of refraction as the glass will essentially seem to disappear. Therefore, the reparative material 216 is also optically transparent. To enhance optics, the glass of the windshield 102 and the reparative material 216 have substantially equivalent indices of refraction. For instance, the index of refraction of the reparative material 216 is within 10% of the index of refraction of the windshield 102.

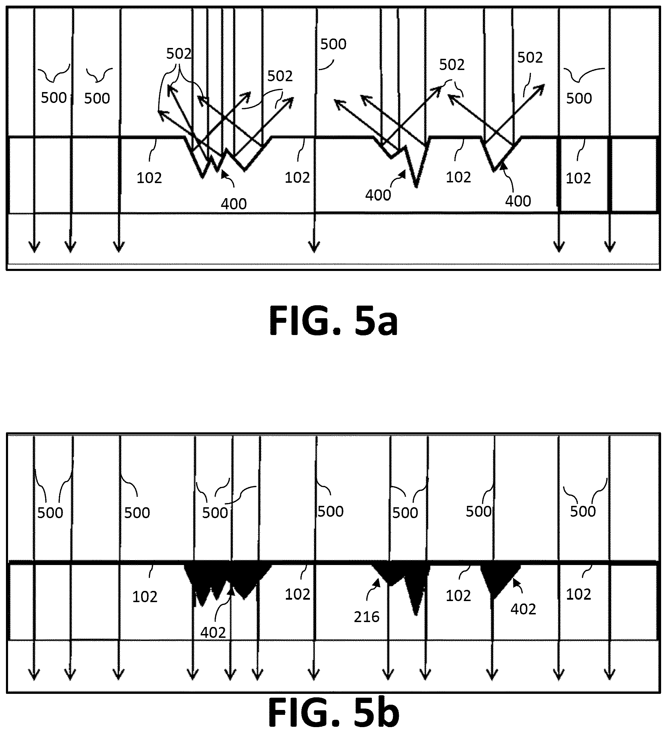

Figures 5a and 5b illustrate a reduction in refraction 502 (i.e., glare) from the surface of a windshield 102 after the reparative material 216 has become a cured reparative material 402 and filled scratches 400 in the surface of the windshield 102. Specifically, Figure 5a illustrates refraction 502 emitting from the surface of the windshield 102 as rays 500 of light are directed to the windshield 102. The rays 500 of light are shown reflecting off the scratches 400 in the windshield 102. Figure 5b illustrates the surface of the windshield 102 with the cured reparative material 402. Figure 5b illustrates the rays 500 of light reaching the surface of the windshield 102 but not reflecting off the now filled scratches 400. As can be appreciated, the scratch is filled with a reparative material 216 that, when cured, has the same index of refraction as the windshield 102 to make the scratch effectively invisible to the human eye, thus reducing glare.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Aspects of the disclosure are provided in the following numbered clauses:
Clause 1. A wiper blade for reducing glare on a windshield of a vehicle, the wiper blade comprising:
   a squeegee configured to transfer a reparative material to a surface of the windshield in an uncured state; and
   a wiping lip coupled to the squeegee, wherein the wiping lip includes a coating comprising the reparative material.
Clause 2. The wiper blade of clause 1, further comprising a seal to mitigate premature curing of the reparative material prior to application.
Clause 3. The wiper blade of clause 2, wherein the seal comprises an ultraviolet (UV) light filter.
Clause 4. The wiper blade of clause 1, wherein the reparative material is configured to fill scratches on the surface of the windshield.
Clause 5. The wiper blade of clause 1, wherein the reparative material is configured to cure when exposed to oxygen.
Clause 6. The wiper blade of clause 1, wherein the reparative material is configured to cure when exposed to ultraviolet (UV) light.
Clause 7. The wiper blade of clause 1, wherein the cured reparative material is configured to reduce refraction from a surface of the windshield.
Clause 8. A wiper blade for reducing refraction on a windshield of a vehicle, the wiper blade comprising:
   a spoiler having a reservoir configured to hold a reparative material;
   a squeegee coupled to the spoiler, wherein the squeegee comprises a wiping lip; and
   a plurality of dispensing ports distributed along a length of the wiper blade,
      wherein the plurality of dispensing ports is fluidly coupled to the reservoir and configured to dispense the reparative material onto a surface of the windshield or the wiping lip.
Clause 9. The wiper blade of clause 8, wherein the reparative material is configured to fill scratches on a surface of the windshield.
Clause 10. The wiper blade of clause 8, wherein the reparative material is configured to cure on a surface of the windshield.
Clause 11. The wiper blade of clause 8, wherein the reparative material is configured to cure when exposed to ultraviolet (UV) light.
Clause 12. The wiper blade of clause 8, further comprising a seal to mitigate premature curing of the reparative material prior to application.
Clause 13. The wiper blade of clause 12, wherein the seal comprises an ultraviolet (UV) light filter.
Clause 14. The wiper blade of clause 8, wherein the spoiler further comprises one or more filler ports fluidly coupled to the reservoir.
Clause 15. The wiper blade of clause 8, wherein the reparative material is configured to cure when exposed to oxygen.
Clause 16. The wiper blade of clause 8, wherein the reparative material, when cured, is configured to reduce refraction from a surface of the windshield.
Clause 17. A method for reducing refraction from a windshield of a vehicle, the method comprising:
   applying a coating of a reparative material in an uncured state to a wiping lip of a wiper blade,
   wherein the reparative material is configured to fill scratches in a surface of the windshield and to cure on a surface of the windshield, and
   wherein the wiping lip is configured to apply the reparative material to a surface of the windshield by wiping the windshield; and
   sealing the reparative material prior to application via a seal.
Clause 18. The method of clause 17, further comprising applying the reparative material to the wiping lip via a reservoir.
Clause 19. The method of clause 17, further comprising applying a coating of the reparative material to the wiping lip.
Clause 20. The method of clause 17, further comprising curing the reparative material through exposure to ultraviolet (UV) light.

## Claims

1. A wiper blade for reducing glare on a windshield of a vehicle, the wiper blade comprising:
a squeegee configured to transfer a reparative material to a surface of the windshield in an uncured state; and
a wiping lip coupled to the squeegee, wherein the wiping lip includes a coating comprising the reparative material.

2. The wiper blade of claim 1, further comprising a seal to mitigate premature curing of the reparative material prior to application, optionally wherein the seal comprises an ultraviolet (UV) light filter.

3. The wiper blade of claim 1, wherein the reparative material is configured to fill scratches on the surface of the windshield.

4. The wiper blade of claim 1, wherein the reparative material is configured to cure when exposed to oxygen.

5. The wiper blade of claim 1, wherein the reparative material is configured to cure when exposed to ultraviolet (UV) light.

6. The wiper blade of claim 1, wherein the cured reparative material is configured to reduce refraction from a surface of the windshield.

7. A wiper blade for reducing refraction on a windshield of a vehicle, the wiper blade comprising:
a spoiler having a reservoir configured to hold a reparative material;
a squeegee coupled to the spoiler, wherein the squeegee comprises a wiping lip; and
a plurality of dispensing ports distributed along a length of the wiper blade,
wherein the plurality of dispensing ports is fluidly coupled to the reservoir and configured to dispense the reparative material onto a surface of the windshield or the wiping lip.

8. The wiper blade of claim 7, wherein the reparative material is configured to fill scratches on a surface of the windshield.

9. The wiper blade of claim 7, wherein the reparative material is configured to cure on a surface of the windshield, for example the reparative material is configured to cure when exposed to ultraviolet (UV) light, and optionally wherein the wiper blade further comprises a seal to mitigate premature curing of the reparative material prior to application, optionally wherein the seal comprises an ultraviolet (UV) light filter.

10. The wiper blade of claim 7, wherein the spoiler further comprises one or more filler ports fluidly coupled to the reservoir.

11. The wiper blade of claim 7, wherein the reparative material is configured to cure when exposed to oxygen, optionally wherein the reparative material, when cured, is configured to reduce refraction from a surface of the windshield.

12. A method for reducing refraction from a windshield of a vehicle, the method comprising:
applying a coating of a reparative material in an uncured state to a wiping lip of a wiper blade,
wherein the reparative material is configured to fill scratches in a surface of the windshield and to cure on a surface of the windshield, and
wherein the wiping lip is configured to apply the reparative material to a surface of the windshield by wiping the windshield; and
sealing the reparative material prior to application via a seal.

13. The method of claim 12, further comprising applying the reparative material to the wiping lip via a reservoir.

14. The method of claim 12, further comprising applying a coating of the reparative material to the wiping lip.

15. The method of claim 12, further comprising curing the reparative material through exposure to ultraviolet (UV) light.
